# EUROPÄISCHE PATENTSCHRIFT

(11) **EP 2 726 825 B1**
(45) Veröffentlichungstag und Bekanntmachung des Hinweises auf die Patenterteilung: **19.07.2017**
(21) Anmeldenummer: 12715863.2
(22) Anmeldetag: 20.03.2012
(51) Int. Cl.: G01D 18/00

(54) **VERFAHREN ZUM ERFASSEN VON ZUSTANDSÄNDERUNGEN IN EINER ANORDNUNG UND ANORDNUNG ZUM ERFASSEN VON ZUSTANDSÄNDERUNGEN**
METHOD FOR DETECTING STATE CHANGES IN AN ASSEMBLY AND ASSEMBLY FOR DETECTING STATE CHANGES
PROCÉDÉ DE DÉTECTION DE CHANGEMENTS D'ÉTAT D'UN SYSTÈME ET SYSTÈME DE DÉTECTION DE CHANGEMENTS D'ÉTAT

(30) Priorität: 23.08.2011 DE 102011081424
(43) Veröffentlichungstag der Anmeldung: 07.05.2014
(73) Patentinhaber: Siemens Aktiengesellschaft, 80333 München (DE)
(72) Erfinder: WAIDA, Sven, 38104 Braunschweig (DE)
(86) Internationale Anmeldenummer: PCT/EP2012/054861
(87) Internationale Veröffentlichungsnummer: WO 2013/026586

(56) Entgegenhaltungen:
- WO-A1-01/69403
- DE-A1- 10 162 689
- DE-A1-102009 037 369

## Beschreibung

Aus Sicherheitsgründen werden häufig in einer Anordnung zum Erfassen von Zustandsänderungen die Zustandsänderungen unter Einsatz zweier Rechnereinheiten erfasst und parallel zu einem übergeordneten Rechner übertragen. Dies gilt beispielsweise für von Überwachungseinrichtungen erfasste Mess- und/oder Zählwert von Zustandsänderungen als z. B. Temperatur-, Druck-, Magnetfeldänderungen, usw. Dies gilt aber auch für Zustandsänderungen in den Rechnereinheiten selbst.

Die vorliegende Erfindung betrifft ein Verfahren zum Kalibrieren eines Raddoppelsensors, wobei eine Anordnung vorgesehen ist mit einer ersten Einrichtung mit einer ersten Rechnereinheit und mit einer ersten, an die erste Rechnereinheit angeschlossenen Überwachungseinrichtung in Form eines Radsensors zum Aufnehmen von Achszählsignalen eines vorbei fahrenden Schienenfahrzeugs, mit einer zweiten Einrichtung mit einer zweiten gleichartigen Rechnereinheit und mit einer zweiten, an die zweite Rechnereinheit angeschlossenen gleichartigen Überwachungseinrichtung in Form eines Radsensors zum Aufnehmen von Achszählsignalen des vorbei fahrenden Schienenfahrzeugs und mit einem mit den Rechnereinheiten verbundenen, übergeordneten Rechner.

Ein solches Verfahren ist aus der deutschen Offenlegungsschrift DE 10 2009 037 369 A1 bekannt.

In sicherheitsrelevanten Anordnungen stellt sich nicht selten das Problem, bei laufendem Betrieb die parallel arbeitenden Überwachungseinrichtungen überprüfen oder kalibrieren zu müssen. Mindestens eine von zwei Überwachungseinrichtungen muss daher weiter voll funktionsfähig gehalten werden, während die andere Überwachungseinrichtung überprüft oder kalibriert wird und umgekehrt. Dies führt nun dazu, dass Meldungen über das Überprüfen oder Kalibrieren zeitversetzt über die beiden Rechnereinheiten laufen, was zu Irritationen und Verfügbarkeitsproblemen bei dem übergeordneten Rechner führen kann.

Um hier Abhilfe zu schaffen, werden gemäß der Erfindung mittels eines zwischen dem übergeordneten Rechner und den Rechnereinheiten geschalteten Kommunikationsmoduls Kommandosignale des übergeordneten Rechners zum Kalibrieren des Raddoppelsensors an die Rechnereinheiten weitergeleitet und bei einer zeitlich versetzt ablaufenden Kalibrierung der beiden Überwachungseinrichtungen in Form der Radsensoren wird ein Signalaustausch zwischen den Rechnereinheiten dahingehend bewirkt, dass der übergeordnete Rechner mit zeitsynchronen, das Ende der Kalibrierung der Radsensoren anzeigenden Ausgangssignalen der Rechnereinheiten beaufschlagt wird, wobei der Rechner die beiden Ausgangssignale hinsichtlich eines erfolgreichen Kalibrierens der beiden Überwachungseinheiten vergleicht. Ein Vorteil des erfindungsgemäßen Verfahrens besteht darin, dass trotz zeitversetzt vorgenommener Überprüfung oder Kalibrierung mit zeitversetzt auftretenden Signalen in den Rechnereinheiten Ausgangssignale dieser Rechnereinheiten gebildet werden, die synchronisiert sind. Diese Ausgangssignale können dann in dem übergeordneten Rechner ohne weiteres miteinander verglichen werden.

Bei einer besonders vorteilhaften Ausführungsform des erfindungsgemäßen Verfahrens wird auf das Kommandosignal hin von der ersten Rechnereinheit ein erstes Kalibrier-Ende-Signal erzeugt, über das Kommunikationsmodul zur zweiten Rechnereinheit übertragen und dort gespeichert; auf das Kommandosignal hin wird von der zweiten Rechnereinheit ein zweites Kalibrier-Ende-Signal gebildet und über das Kommunikationsmodul zu der ersten Rechnereinheit übermittelt, und es geben daraufhin die beiden Rechnereinheiten die beiden zeitsynchronen Ausgangssignale ab.

Bei dem erfindungsgemäßen Verfahren werden Überwachungseinrichtungen in Form von Sensoren verwendet, die kalibriert werden müssen, so dass die Verwendung von Kalibrier-Ende-Signalen vorteilhaft ist.

Die Verwendung von Sensoren in Form von Radsensoren in Form eines Doppelsensors für eine Gleisfreimeldeanlage ist vorteilhaft, weil solche Doppelsensoren relativ häufig auch während des Zugverkehrs kalibriert werden müssen. Diesbezüglich wird ergänzend auf die deutsche Offenlegungsschrift DE 10 2009 037 369 A1 verwiesen, die sich mit dem Kalibrieren von Radsensoren für Gleisfreimeldeanlagen befasst.

Um das erfindungsgemäße Verfahren hinsichtlich der Überwindung von Verfügbarkeitsproblemen bei dem übergeordneten Rechner noch weiter zu verbessern, wird mittels des Kommunikationsmoduls das Erkennen von periodisch auftretenden Synchronisationssignalen durch die beiden Rechnereinheiten überwacht und bei festgestelltem Erkennen werden die Kommandosignale in die Rechnereinheiten weiter geleitet.

Die Erfindung stellt sich ferner die Aufgabe, eine Anordnung zum zuverlässigen Kalibrieren eines Raddoppelsensors vorzuschlages.

Der Lösung dieser Aufgabe dient erfingdungsgemäß eine Anordnung mit einer ersten Einrichtung mit einer ersten Rechnereinheit und mit einer ersten, an die erste Rechnereinheit angeschlossenen Überwachungseinrichtung in Form eines Radsensors zum Aufnehmen von Achszählsignalen eines vorbei fahrenden Schienenfahrzeugs, mit einer zweiten Einrichtung mit einer zweiten gleichartigen Rechnereinheit und mit einer zweiten, an die zweite Rechnereinheit angeschlossenen gleichartigen Überwachungseinrichtung in Form eines Radsensors zum Aufnehmen von Achszählsignalen des vorbei fahrenden Schienenfahrzeugs und mit einem mit den Rechnereinheiten verbundenen, übergeordneten Rechner, bei der zwischen dem übergeordneten Rechner und den Rechnereinheiten ein Kommunikationsmodul geschaltet ist, das Kommandosignale des übergeordneten Rechners zum Kalibrieren des Raddoppelsensors an die Rechnereinheiten weiterleitet und bei einer zeitlich versetzt ablaufenden Kalibrierung der beiden Uberwachungseinrichtungen in Form der Radsensoren einen Signalaustausch zwischen den Rechnereinheiten dahingehend bewirkt, dass der übergeordnete Rechner mit zeitsynchronen, das Ende der Kalibrierung der Radsensoren anzeigenden Ausgangssignalen der Rechnereinheiten beaufschlagt wird, wobei der Rechner dazu ausgelegt ist, die beiden Ausgangssignale hinsichtlich eines erfolgreichen Kalibrierens der beiden Überwachungseinheiten zu vergleichen. Vorteilhaft ist die erfindungsgemäße Anordnung vor allem insofern, als mit ihr einerseits Irritationen des übergeordneten Rechners bei zeitversetzten Ausgangssignalen vermieden sind und andererseits die Verfügbarkeit des Rechners nicht beeinträchtigt ist.

Mit der erfindungsgemäßen Anordnung lassen sich im Wesentlichen dieselben Vorteile erzielen, die oben bereits im Zusammenhang mit der Erläuterung des erfindungsgemäßen Verfahrens dargelegt worden sind.

Zu diesen Vorteilen der erfindungsgemäßen Anordnung trägt besonders bei, wenn die Rechnereinheiten so ausgebildet sind, dass sie jeweils mindestens einen Zustandsautomaten aufweisen.

Bei der erfindungsgemäßen Anordnung sind die Überwachungseinrichtungen Sensoren, die von einem Radsensor in Form eines Doppelsensors gebildet sind. Dies ist vorteilhaft, weil sich mit diesen außer durch wiederholtes Kalibrieren genaue Messungen sicher stellen lassen.

Besonders vorteilhaft ist die erfindungsgemäße Anordnung dann, wenn das Kommunikationsmodul derart ausgebildet ist, dass es das Erkennen von periodisch auftretenden Synchronisationssignalen durch die beiden Rechnereinheiten überwacht und bei festgestelltem Erkennen die Kommandosignale in die Rechnereinheiten weiter leitet. Bei dieser Ausgestaltung des erfindungsgemäßen Verfahrens ist die Verfügbarkeit des übergeordneten Rechners besonders gut sicher gestellt.

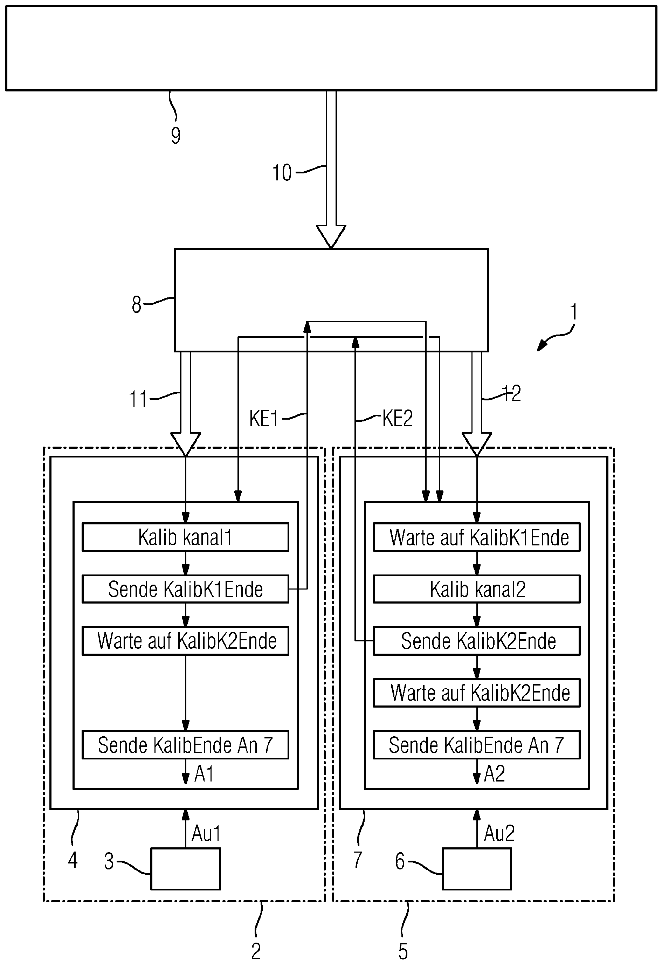

Zur weiteren Erläuterung der Erfindung ist in der Figur ein Ausführungsbeispiel der erfindungsgemäßen Anordnung dargestellt.

Die gezeigte Anordnung 1 weist eine erste mit Zustandsänderungen beaufschlagte Einrichtung 2 auf, die eine erste Überwachungseinrichtung 3 und eine an diese angeschlossene erste Rechnereinheit 4 enthält. Eine zweite mit Zustandsänderungen beaufschlagte Einrichtung 5 besitzt eine gleichartige Überwachungseinrichtung 6 und eine daran angeschlossene zweite Rechnereinheit 7; beide Überwachungseinrichtungen 3 und 6 sowie die Rechnereinheiten 4 und 7 sind nur schematisch jeweils als Block dargestellt, weil sie sehr verschieden ausgeführt sein können. Bei der nachfolgenden Darstellung wird davon ausgegangen, dass die Überwachungseinrichtungen 3 und 6 jeweils von einem Radsensor für eine Gleisfreimeldeanlage gebildet sind, somit einen Doppelsensors darstellen. Mit der ersten Rechnereinheit 4 werden im laufenden Betrieb beim Überfahren der Überwachungseinrichtung 3 als Zustandsänderungen Achszählsignale eines vorbei fahrenden Schienenfahrzeugs aufgenommen. Die der zweiten Überwachungseinrichtung 6 nachgeordnete zweite Rechnereinheit 7 empfängt im laufenden Betrieb ebenfalls Zustandsänderungen in Form von Achszählsignalen. Die beiden Rechnereinheiten 4 und 7 sind über ein Kommunikationsmodul 8 untereinander verbunden; das Kommunikationsmodul 8 ist außerdem an einen übergeordneten Rechner 9 angeschlossen.

Wie in der oben erwähnten deutschen Offenlegungsschrift DE 10 2009 037 369 DE im Einzelnen beschrieben ist, muss ein Radsensor bzw. ein Raddoppelsensor kalibriert bzw. immer wieder nachkalibriert werden, um auftretende Abnutzungen der Schiene auszugleichen. Derartige Zustandsänderungen werden erfasst und periodisch oder gezielt durch Nachkalibrieren berücksichtigt, indem von dem übergeordneten Rechner 9 über einen Signalpfad 10 ein Kommando "Kalibrieren" an das Kommunikationsmodul 8 gesendet wird. Dieses splittet das Kommando bzw. Telegramm auf und sendet es über weitere Signalpfade 11 und 12 an die beiden Rechnereinheiten 4 und 7. Da das Kalibrieren bei laufendem Schienenfahrzeugverkehr erfolgen soll, ist auf im Einzelnen nicht dargestellte Weise dafür gesorgt, dass in einem Schritt "Kalib kanal1" das Kalibrieren der ersten Überwachungseinrichtung 3 mittels Ausgangssignalen Au1 der ersten Überwachungseinrichtung 3 erfolgt. Ist das Kalibrieren der Überwachungseinrichtung 3 beendet, dann wird in einem weiteren Schritt "Sende KalibK1Ende" ein Signal Kalibrier-Ende-Signal KE1 über das Kommunikationsmodul 8 an die zweite Rechnereinheit 7 gesendet, die sich in einer mittels eines Zustandsautomaten gebildeten Warteposition "Warte auf KalibK1Ende" befindet und daher bei Eingang des Kalibrier-Ende-Signals KE1 mit dem Kalibrieren der zweiten Überwachungseinrichtung 6 unter Benutzung von Ausgangsignalen Au2 der zweiten Überwachungseinrichtung 6 anfängt und bis zum Ende durchführt.

Am Schluss des Kalibrierens der zweiten Überwachungseinrichtung 6 wird in einem Schritt "Sende KalibK2Ende" ein weiteres Kalibrier-Ende-Signal KE2 an das Kommunikationsmodul 8 übermittelt und von diesem sowohl der ersten Rechnereinheit 4 als auch der zweiten Rechnereinheit 7 zugeleitet. Da die erste Rechnereinheit 4 mit dem Absenden des Kalibrier-Ende-Signals KE1 in eine mittels eines weiteren Zustandsautomaten erzeugte Warteposition "Warte auf KalibK2Ende" versetzt worden ist, sendet es jetzt sofort in einem Schritt "Sende KalibEndeAn7" ein Ausgangsignal A1 in figürlich nicht gezeigter Weise an den übergeordneten Rechner 9.

Mit dem Absenden des Kalibrier-Ende-Signals KE2 war die zweite Rechnereinheit 7 mittels des weiteren Zustandsautomaten in einen Zustand "Warte auf KalibK2Ende" gestellt worden, so dass mit der Übermittlung des Kalibrier-Ende-Signals KE2 auch von der zweiten Rechnereinheit 7 in einem Schritt "Sende KalibEndeAn7" ein Ausgangssignal A2 an den übergeordneten Rechner 9 gesendet wird. Der Rechner 9 erhält somit die Ausgangssignale A1 und A2 der beiden Rechnereinheiten 4 und 7 zur gleichen Zeit und ist damit in die Lage versetzt, die beiden Ausgangssignale hinsichtlich eines erfolgreichen Kalibrierens der beiden Überwachungseinrichtungen 3 und 6 zu vergleichen, obwohl die Ausgangssignale A1 und A2 auf das Kalibrieren der beiden Überwachungseinrichtungen 3 und 6 zu verschiedenen Zeitpunkten zurückgehen. Die Ausgangssignale A1 und A2 sind damit also synchronisiert und eine hohe Verfügbarkeit des übergeordneten Rechners 9 gewährleistet.

Oben ist bereits angedeutet worden, dass die Signale zwischen dem übergeordneten Rechner 9, dem Kommunikationsmodul 8 und den beiden Rechnereinheiten 4 und 7 als Telegramme übertragen werden. Durch den oben beschriebenen Ablauf der Signalverarbeitung ist auch dafür gesorgt, dass die Sequenznummern der Ausgangssignale A1 und A2 als Telegramme übereinstimmen und die beiden Telegramme richtig von dem übergeordneten Rechner 9 ausgewertet werden.

Abschließend ist noch darauf hinzuweisen, dass sich die Wirkungsweise des erfindungsgemäßen Verfahrens noch weiter verbessern lässt, wenn das übliche zyklische Versenden von Überlebenstelegrammen von dem Kommunikationsmodul 8 überwacht wird. Dieses Modul 8 wartet ab, bis das zyklisch auftretende Überlebenstelegramm von den beiden Rechnereinheiten 4 und 7 erkannt wird, und gibt erst dann das über den Signalpfad von dem übergeordneten Rechner 9 erhaltene Kommando an die Rechnereinheiten 4 und 7 weiter.

## Patentansprüche

1. Verfahren zum Kalibrieren eines Raddoppelsensors, wobei eine Anordnung (1) vorgesehen ist mit einer ersten Einrichtung (2) mit einer ersten Rechnereinheit (4) und mit einer ersten, an die erste Rechnereinheit (4) angeschlossenen Überwachungseinrichtung (3) in Form eines Radsensor zum Aufnehmen von Achszählsignalen eines vorbei fahrenden Schienenfahrzeugs, mit einer zweiten Einrichtung (5) mit einer zweiten gleichartigen Rechnereinheit (7) und mit einer zweiten, an die zweite Rechnereinheit (7) angeschlossenen gleichartigen Überwachungseinrichtung (6) in Form eines Radsensor zum Aufnehmen von Achszählsignalen des vorbei fahrenden Schienenfahrzeugs und mit einem mit den Rechnereinheiten (4,7) verbundenen, übergeordneten Rechner (9),
**dadurch gekennzeichnet, dass**
mittels eines zwischen dem übergeordneten Rechner (9) und den Rechnereinheiten (4,7) geschalteten Kommunikationsmoduls (8) Kommandosignale des übergeordneten Rechners (9) zum Kalibrieren des Raddoppelsensors an die Rechnereinheiten (4,7) weitergeleitet werden und bei einer zeitlich versetzt ablaufenden Kalibrierung der beiden Überwachungseinrichtungen (3,6) in Form der Radsensoren ein Signalaustausch zwischen den Rechnereinheiten (4,7) dahingehend bewirkt wird, dass der übergeordnete Rechner (9) mit zeitsynchronen, das Ende der Kalibrierung der Radsensoren (3,6) anzeigenden Ausgangssignalen (A1,A2) der Rechnereinheiten (4,7) beaufschlagt wird, und dass der Rechner (9) die beiden Ausgangssignale (A1, A2) hinsichtlich eines erfolgreichen Kalibrierens der beiden Überwachungseinrichtungen (3, 6) vergleicht.

2. Verfahren nach einem der vorangehenden Ansprüche,
**dadurch gekennzeichnet, dass**
auf das Kommandosignal hin von der ersten Rechnereinheit (4) ein erstes Kalibrier-Ende-Signal (KE1) erzeugt, über das Kommunikationsmodul (8) zur zweiten Rechnereinheit (7) übertragen und dort gespeichert wird und auf das Kommandosignale hin von der zweiten Rechnereinheit (7) ein zweites Kalibrier-Ende-Signal (KE2) gebildet und über das Kommunikationsmodul (8) zu der ersten Rechnereinheit (4) übermittelt wird und daraufhin die beiden Rechnereinheiten (4,7) die beiden zeitsynchronen Ausgangssignale (A1,A2) abgeben.

3. Verfahren nach einem der vorangehenden Ansprüche,
**dadurch gekennzeichnet, dass**
mittels des Kommunikationsmoduls (8) das Erkennen von periodisch auftretenden Synchronisationssignalen durch die beiden Rechnereinheiten (4,7) überwacht wird und bei festgestelltem Erkennen die Kommandosignale in die Rechnereinheiten (4,7) weiter geleitet werden.

4. Anordnung (1) mit einer ersten Einrichtung (2) mit einer ersten Rechnereinheit (4) und mit einer ersten, an die erste Rechnereinheit (4) angeschlossenen Überwachungseinrichtung (3) in Form eines Radsensors zum Aufnehmen von Achszählsignalen eines vorbei fahrenden Schienenfahrzeugs, mit einer zweiten Einrichtung (5) mit einer zweiten gleichartigen Rechnereinheit (7) und mit einer zweiten, an die zweite Rechnereinheit (7) angeschlossenen gleichartigen Überwachungseinrichtung (6) in Form eines Radsensors zum Aufnehmen von Achszählsignale des vorbei fahrenden Schienenfahrzeugs und mit einem mit den Rechnereinheiten (4,7) verbundenen, übergeordneten Rechner (9),
**dadurch gekennzeichnet, dass**
zwischen dem übergeordneten Rechner (9) und den Rechnereinheilten (4,7) ein Kommunikationsmodul (8) geschaltet ist, das Kommandosignale des übergeordneten Rechners (9) zum Kalibrieren des Raddoppelsensors an die Rechnereinheiten (4,7) weiterleitet und bei einer zeitlich versetzt ablaufenden Kalibrierung der beiden Überwachungseinrichtungen (3,6) in Form der Radsensoren einen Signalaustausch zwischen den Rechnereinheiten (4,7) dahingehend bewirkt, dass der übergeordnete Rechner (9) mit zeitsynchronen, das Ende der Kalibrierung der Radsensoren (3, 6) anzeigenden Ausgangssignalen (A1,A2 der Rechnereinheiten (4,7) beaufschlagt wird, wobei der Rechner (9) dazu ausgelegt ist, die beiden Ausgangssignale (A1, A2) hinsichtlich eines erfolgreichen Kalibrierens der beiden Überwachungseinheiten (3, 6) zu vergleichen.

5. Anordnung nach Anspruch 4,
**dadurch gekennzeichnet, dass**
die Rechnereinheiten (4,7) so ausgebildet sind, dass sie jeweils mindestens einen Zustandsautomaten aufweisen.

6. Anordnung nach einem der Ansprüche 4 oder 5,
**dadurch gekennzeichnet, dass**
das Kommunikationsmodul (8) derart ausgebildet ist, dass es das Erkennen von periodisch auftretenden Synchronisationssignalen durch die beiden Rechnereinheiten (4,7) überwacht und bei festgestelltem Erkennen die Kommandosignale in die Rechnereinheiten (4,7) weiter leitet.

## Claims

1. Method for calibrating a double wheel sensor, wherein an arrangement (1) is provided having a first device (2) having a first processing unit (4) and having a first monitoring device (3) connected to the first processing unit (4) in the form of a wheel sensor for recording axle counting signals of a passing rail vehicle, having a second device (5) having a second similar processing unit (7) and having a second similar monitoring device (6) connected to the second processing unit (7) in the form of a wheel sensor for recording axle counting signals of the passing rail vehicle and having a superordinate computer (9) connected to the processing units (4, 7), **characterised in that**
by means of a communication module (8) connected between the superordinate computer (9) and the processing units (4, 7) command signals from the superordinate computer (9) are forwarded to the processing units (4, 7) for calibration of the double wheel sensor and in the case of calibration running in a temporally offset manner of the two monitoring devices (3, 6) in the form of the wheel sensors a signal exchange between the processing units (4, 7) is effected such that the superordinate computer (9) is acted upon by time-synchronous output signals (A1, A2) from the processing units (4, 7) indicating the end of the calibration of the wheel sensors (3, 6), and that the computer (9) compares the two output signals (A1, A2) in respect of a successful calibration of the two monitoring devices (3, 6).

2. Method according to one of the preceding claims, **characterised in that**
at the command signal from the first processing unit (4) a first calibration end signal (KE1) is generated, is transmitted via the communication module (8) to the second processing unit (7) and is saved there, and at the command signal from the second processing unit (7) a second calibration end signal (KE2) is formed and is transmitted via the communication module (8) to the first processing unit (4) and thereupon the two processing units (4, 7) emit the two time-synchronised output signals (A1, A2).

3. Method according to one of the preceding claims, **characterised in that**
by means of the communication module (8) the identification of periodically occurring synchronisation signals is monitored by the two processing units (4, 7) and if identification is established the command signals are forwarded to the processing units (4, 7).

4. Arrangement (1) having a first device (2) having a first processing unit (4) and having a first monitoring device (3) connected to the first processing unit (4) in the form of a wheel sensor for recording axle counting signals of a passing rail vehicle, having a second device (5) having a second similar processing unit (7) and having a second similar monitoring device (6) connected to the second processing unit (7) in the form of a wheel sensor for recording axle counting signals of the passing rail vehicle and having a superordinate computer (9) connected to the processing units (4, 7), **characterised in that**
a communication module (8) is connected between the superordinate computer (9) and the processing units (4, 7), which forwards command signals from the superordinate computer (9) to the processing units (4, 7) for calibration of the double wheel sensor and in the case of calibration running in a temporally offset manner of the two monitoring devices (3, 6) in the form of the wheel sensors a signal exchange between the processing units (4, 7) is effected such that the superordinate computer (9) is acted upon by time-synchronous output signals (A1, A2) from the processing units (4, 7) indicating the end of the calibration of the wheel sensors (3, 6), wherein the computer (9) is designed to compare the two output signals (A1, A2) in respect of a successful calibration of the two monitoring devices (3, 6).

5. Arrangement according to claim 4,
**characterised in that**
the processing units (4, 7) are designed such that they each have at least one state machine.

6. Arrangement according to one of claims 4 or 5, **characterised in that**
the communication module (8) is designed such that it monitors the identification of periodically occurring synchronisation signals by the two processing units (4, 7) and if identification is established forwards the command signals to the processing units (4, 7).

## Revendications

1. Procédé d'étalonnage d'un capteur double de roue, dans lequel il est prévu un agencement ( 1 ), comprenant un premier dispositif (2) ayant une première unité (4) informatique et ayant un premier dispositif ( 3 ) de contrôle, qui est raccordé à la première unité ( 4 ) informatique et qui est sous la forme d'un capteur de roue, pour l'enregistrement de signaux de comptage d'essieux d'un véhicule ferroviaire passant devant lui, comprenant un deuxième dispositif ( 5 ) ayant une deuxième unité ( 7 ) informatique de même type et un deuxième dispositif ( 6 ) de contrôle de même type, raccordé à la deuxième unité ( 7 ) informatique et sous la forme d'un capteur de roue pour enregistrer des signaux de comptage d'essieux du véhicule ferroviaire passant devant lui et comprenant un ordinateur ( 9 ) supérieur hiérarchiquement et relié aux unités ( 4, 7 ) informatiques,
**caractérisé en ce que**
au moyen d'un module ( 8 ) de communication, monté entre l'ordinateur ( 9 ) supérieur hiérarchiquement et les unités ( 4, 7 ) informatiques, on achemine des signaux de commande de l'ordinateur ( 9 ) supérieur hiérarchiquement, pour l'étalonnage du capteur double de roue, aux unités ( 4, 7 ) informatiques et on provoque, lors d'un étalonnage se déroulant de manière décalée dans le temps des deux dispositifs ( 3, 6 ) de contrôle, sous la forme des capteurs de roue, un échange de signal entre les unités ( 4, 7 ) informatiques, tendant à ce que l'ordinateur ( 9 ) supérieur hiérarchiquement soit soumis à des signaux ( A1, A2 ) de sortie des unités ( 4, 7 ) informatiques, en synchronisme dans le temps, indiquant la fin de l'étalonnage des capteurs ( 3, 6 ) de roue, et **en ce que** l'ordinateur ( 9 ) compare les deux signaux ( A1, A2 ) de sortie en ce qui concerne un étalonnage couronné de succès des deux dispositifs ( 3, 6 ) de contrôle.

2. Procédé suivant l'une des revendications précédentes, **caractérisé en ce que**,
sur le signal de commande, on produit, par la première unité ( 4 ) informatique, un premier signal ( KE1 ) de fin d'étalonnage, que l'on transmet par le module ( 8 ) de communication à la deuxième unité ( 7 ) informatique et on l'y mémorise et, sur le signal de commande, on forme, par la deuxième unité ( 7 ) informatique, un deuxième signal ( KE2 ) de fin d'étalonnage, que l'on transmet par le module ( 8 ) de communication à la première unité ( 4 ) informatique et, ensuite, les deux unités ( 4, 7 ) informatiques émettent les deux signaux ( A1, A2 ) de sortie en synchronisme dans le temps.

3. Procédé suivant l'une des revendications précédentes, **caractérisé en ce que**
au moyen du module ( 8 ) de communication, on contrôle la reconnaissance, par les deux unités ( 4, 7 ) informatiques, de signaux de synchronisation se produisant de manière périodique et, lorsqu'une reconnaissance est constatée, on achemine les signaux de commande aux unités ( 4, 7 ) informatiques.

4. Agencement ( 1 ), comprenant un premier dispositif ( 2 ) ayant une première unité ( 4 ) informatique et un premier dispositif ( 3 ) de contrôle, raccordé à la première unité ( 4 ) informatique et sous la forme d'un capteur de roue, pour enregistrer des signaux de comptage d'essieux d'un véhicule ferroviaire passant devant lui, comprenant un deuxième dispositif ( 5 ), ayant une deuxième unité ( 7 ) informatique de même type et un deuxième dispositif ( 6 ) de contrôle de même type, raccordé à la deuxième unité ( 7 ) informatique et sous la forme d'un capteur de roue, pour enregistrer des signaux de comptage d'essieux du véhicule ferroviaire passant devant lui, et comprenant un ordinateur ( 9 ) supérieur hiérarchiquement, relié aux unités ( 4, 7 ) informatiques, **caractérisé en ce que**
entre l'ordinateur ( 9 ) supérieur hiérarchiquement et les unités ( 4, 7 ) informatiques, est monté un module ( 8 ) de communication, qui achemine des signaux de commande de l'ordinateur ( 9 ) supérieur hiérarchiquement aux unités ( 4, 7 ) informatiques, pour étalonner le capteur double de roue et, lorsqu'un étalonnage se déroule d'une manière décalée dans le temps des deux dispositifs ( 3, 6 ) de contrôle, sous la forme des capteurs de roue, un échange de signal, entre les unités ( 4, 7 ) informatiques, fait que l'ordinateur ( 9 ) supérieur hiérarchiquement est soumis à des signaux ( A1, A2 ) de sortie des unités ( 4, 7 ) informatiques, en synchronisme dans le temps, indiquant la fin de l'étalonnage des capteurs ( 3, 6 ) de roue, l'ordinateur ( 9 ) étant conçu pour comparer les deux signaux ( A1, A2 ) de sortie en ce qui concerne un étalonnage couronné de succès des deux unités ( 3, 6 ) de contrôle.

5. Agencement suivant la revendication 4,
**caractérisé en ce que**
les unités ( 4, 7 ) informatiques sont constituées de manière à avoir chacune au moins un automate d'état.

6. Agencement suivant l'une des revendications 4 ou 5, **caractérisé en ce que**
le module ( 8 ) de communication est constitué de manière à contrôler, par les deux unités ( 4, 7 ) informatiques, la reconnaissance de signaux de synchronisation se produisant de manière périodique et, lorsque la reconnaissance est constatée, à acheminer les signaux de commande aux unités ( 4, 7 ) informatiques.
